# EUROPEAN PATENT APPLICATION

(11) **EP 4 498 543 A1**
(43) Date of publication of application: **29.01.2025**
(21) Application number: 23188073.3
(22) Date of filing: 27.07.2023
(51) Int. Cl.: H02B 1/36, H02B 11/133, H02B 11/173

(54) **MULTI-USE CONTROL SYSTEM FOR SWITCHGEAR MODULE WITH COUPLING RODS**

(71) Applicant: ABB SCHWEIZ AG, 5400 Baden (CH)
(72) Inventor: RADER, Samuel, 76187 Karlsruhe (DE); PENNER, Simon, 67574 Osthofen (DE); STAHL, Thomas, 74937 Spechbach (DE)
(74) Representative: Maiwald GmbH

(57) **Abstract**

The invention relates to a multi-use control system (100) for a switchgear module (10), which comprises a first pivoting element (110) being connectable to an operating element (160), a second pivoting element (120) that is connectable to a switchgear module (10) being switchable between the plurality of modes of operation, at least one coupling element (131, 132) configured to connect the first and second pivoting elements (120) and an interlocking element (200) configured to secure the switchgear module to or release the switchgear module from a compartment. The at least one coupling element is configured to allow the first and second pivoting elements pivoting for switching the switchgear module between the plurality of modes of operation, when the operating element (160) pivots between the first group of angular positions (161, 162, 163), and allow the first pivoting element interconnecting with the interlocking element for securing or releasing the switchgear module, when the operating element (160) pivots between the second group of angular positions (163, 164).

## Description

### FIELD OF INVENTION

The present disclosure relates to industrial automation. In particular, the present disclosure relates to a multi-use control system for a switchgear module, a switchgear module comprising a multi-use control system and a method for operating a switchgear module by means of a multi-use control system.

### BACKGROUND

Switchgear technology is widely implemented in electrical power systems, such as industrial automation and robotic systems, in order to provide effective control and reliable protection for the embedded electrical components. In particular for low-voltage applications, switchgear modules may regulate power distribution within the electrical power systems, ensuring efficient operation and optimal management of electrical loads. Equipped with protective components such as circuit breakers and fuses, such switchgear modules may safeguard against overcurrent and short circuits, minimizing the risk of equipment damage or accidents. Further, these modules may offer flexibility in installation, expansion, and maintenance, for example for the the automation and robotic systems. It may thus be of great importance that these switchgear modules may be implemented and operated in a well-controlled manner.

### SUMMARY

It may be seen as an objective of the invention to provide an improved control system for seamless operating a switchgear device with an optimized flexibility and reliability.

The objective is achieved by the subject matter of the independent claims. The dependent claims, the following description and the drawings show embodiments of the invention.

According to a first aspect of the present disclosure, a multi-use control system is provided for a switchgear module. The multi-use control system comprises a first pivoting element, which is connectable to an operating element that is pivotable between a plurality of angular positions comprising a first group of angular positions and a second group of angular positions, a second pivoting element, which is connectable to a switchgear module being switchable between the plurality of modes of operation, at least one coupling element, which is configured to connect the first pivoting element and the second pivoting element, and an interlocking element that is configured to secure the switchgear module to or release the switchgear module from a compartment.

The at least one coupling element is configured to allow first pivoting element and the second pivoting element pivoting for switching the switchgear module between the plurality of modes of operation, when the operating element pivots between the first group of angular positions. Further, the at least one coupling element is configured to allow the first pivoting element interconnecting with the interlocking element for securing or releasing the switchgear module, when the operating element pivots between the second group of angular positions.

The first pivoting element may be configured to form a switching assembly with the second pivoting element, in order to switch the switchgear module that may be secured to the compartment between the plurality of modes of operation. Accordingly, the operating element attached to the first pivoting element may pivot over a first angular range covering the first group of angular positions. After a transition, in which the operating element may further pivot over a second angular range covering the second group of angular positions, the first pivoting element may be configured to come into contact with the interlocking element and form an interlocking assembly with the interlocking element for securing the switchgear module to or release the switchgear module from the compartment. It may be provided that the second pivoting element may be connected to a main switch of the switchgear module. As such, the control system may be designed to allow separate controlling over the switching assembly for the switching mechanism of the switchgear module or over the interlocking assembly for the interlocking mechanism of the switchgear module. Further the control system may be designed to allow a seamless transition between the switching mechanism and the interlocking mechanism.

For example, the compartment may be a housing, in which the switchgear module may be placed or mounted, so that the switchgear module may be operated under a safety condition. The switchgear module may be released or detached from the compartment while not being operated. Hence, the switchgear module may be designed as a withdrawable switchgear module. In particular, the withdrawable switchgear module may be a low-voltage switchgear module.

According to an embodiment, the multi-use control system may further comprise the operating element, which may be a handle and configured to connect to the first pivoting element via a shaft.

The operating element may be configured to control the switching assembly to switch the switchgear module between the plurality of modes of operation, when pivoting between the first group of angular positions, and to control the interlocking assembly to secure or release the switchgear module, when pivoting between the second group of angular positions.

According to another embodiment, the first pivoting element may be configured to pivot about a first rotary axis and the second pivoting element may be configured to pivot about a second rotary axis. The first rotary axis and the second rotary axis may be arranged in parallel.

The operating element may be arranged on the front of the switchgear module. Further, the operating element may be connect to the first pivoting element via the shaft in such a way, that the operating element and the shaft may pivot about the same first rotary axis of the first pivoting element. The second pivoting element may be designed to be or connect to the main switch of the switchgear module, so that the modes of operation of the switchgear module may be switched while the second pivoting element being driven to pivot about the second rotary axis.

The first rotary axis and the second rotary axis may be arranged at a predefined axis distance, which may be designed to be variable, so that the axis of the operating element and the axis of the main switch of the switchgear module may be arranged distant to each other, for example at the predefined axis, for various dimensions of the switchgear module and/or the compartment, in which the switchgear module may be secured.

According to another embodiment, the first pivoting element may comprise a non-rotationally symmetric shape.

According to another embodiment, wherein the first pivoting element may comprise a radially protruding element, which may be configured to abut on the interlocking element and transmit a rotational motion of the first pivoting element to the interlocking element for releasing the switchgear module, when the operating element may pivot between the second group of angular positions.

For example, the first pivoting element may be designed to be a plate-shaped body element, which may be a triangular-shaped disk element. Alternatively, the first pivoting element may be designed to comprise a round disk body portion and the radially protruding element arranged at the rim of the round disk body portion, resulting in the non-rotationally symmetric shape of the first pivoting element. The radially protruding element of the first pivoting element may come into contact with the interlocking element, when the first pivoting element follows the rotary motion of the operating element pivoting within the second angular range covering the second groups of angular positions.

According to another embodiment, the first pivoting element may comprise a same dimension and/or a same shape as the second pivoting element.

As the first pivoting element and the second pivoting element may comprise a same shape and dimension, the first pivoting element and the coupled second pivoting element may pivot synchronized with the same rotational motion at the same velocity, when the operating element may pivot between the first group of angular positions to switch the modes of operation of the switchgear module.

Alternatively, the first pivoting element may comprise a different dimension and/or a different shape than the second pivoting element, but may share a same angular velocity while pivoting for switching the switchgear module between the various modes of operation.

According to another embodiment, the at least one coupling element may comprise a first coupling rod, which may be configured to connect the first pivoting element by means of a first pin arranged at the first pivoting element and to connect the second pivoting element by means of a second pin of the second pivoting element.

The at least coupling element may comprise an elongated body element that may be designed to be rod-shaped. The first coupling rod may comprise a length that may correspond to or identical as the predefined axis distance between the first pivoting element and the second pivoting element. Accordingly, the length of the first coupling rod may be designed to be variable or adjustable depending on the various dimensions of the switchgear module and/or the compartment in which the switchgear module may be placed and secured.

According to another embodiment, the first coupling rod may be configured to couple the first pivoting element and the second pivoting element and to transmit a rotational motion of the first pivoting element to the second pivoting element for switching the switchgear module between the plurality of modes of operation, when the operating element may pivot between the first group of angular positions.

According to another embodiment, the first coupling rod may comprise a first slotted opening, along which the second pin of the second pivoting element may be able to slide, when the operating element may pivot between the second group of angular positions, so that the rotational motion of the first pivoting element at least cannot be fully transmitted to the first pivoting element but to the interlocking element.

For example, the second pin of the second pivoting element may be arranged at the first slotted opening in such a way that, the second pin may be fixed at a first end of the first slotted opening to couple the second pivoting element with the first pivoting element. When the operating element may pivot in a direction, for example in a clockwise direction, between the first group of angular positions, the first coupling rod may transmit the rotational motion of the first pivoting element as a driving element to the second pivoting element as a driven element, so that the first and second pivoting elements may pivot synchronized without the second pin sliding in the first slotted opening. In contrast, when the operating element may further pivot in the same clockwise direction and start to pivot between the second group of angular positions for releasing the switchgear module, the second pin of the second pivoting element may be configured to slide along the first slotted opening from the first end to the second end of the first slotted opening, so that the second pivoting element may at least be partially decoupled from the first pivoting element and the rotational motion of the first pivoting element may at least be not fully transmitted to the second pivoting element. Accordingly, the switching mechanism of the switchgear module may be decoupled from the further pivoting of the first pivoting element and the operating element, and the switchgear module may not be switched to a different mode of operation.

According to another embodiment, the at least one coupling element may further comprise a second coupling rod, which may be configured to connect the first pivoting element by means of a third pin arranged at the first pivoting element and to connect the second pivoting element by means of a fourth pin of the second pivoting element. Additionally, the second coupling rod may comprise a second slotted opening, along which the fourth pin of the second pivoting element may be able to slide, when the operating element may pivot between the second group of angular positions.

The second coupling rod may comprise a same or identical elongated shape and/or a same length as the first coupling rod. The second coupling rod may be arranged in parallel, for example in a vertical direction, to the first coupling rod, when the operating elements may pivot between the first group of angular positions for switching the switchgear module between the modes of operation. Similar to the second pin slidable in the first slotted opening, the fourth pin may be arranged or fixed at the second slotted opening at the first end, when the operating element may pivot in the same clockwise direction between the first group of angular positions. The first coupling rod may transmit the rotational motion of the first pivoting element as a driving element to the second pivoting element as a driven element, so that the first and second pivoting elements may pivot synchronized without the fourth pin sliding in the second slotted opening. In contrast, when the operating element may further pivot in the same clockwise direction and start to pivot between the second group of angular positions for releasing the switchgear module, the second pin of the second pivoting element may be configured to slide along the second slotted opening from the first end to the second end of the second slotted opening, so that the second pivoting element may at least partially be decoupled from the pivoting first pivoting element. With the arrangement of the first and second slotted opening, the transmission of the rotational motion of the first pivoting element to the second pivoting element may at least be partially disrupted or interrupted. Accordingly, the switching mechanism of the switchgear module may be decoupled from the further pivoting of the first pivoting element and the operating element, and the switchgear module may not be switched to a different mode of operation.

The first and second coupling rods may be arranged in parallel to each other and to the elongated axis of the first and second coupling rods. In the lateral direction, the first and second coupling rods may be arranged, respectively, at different positions along the elongated axis. It may be provided that, by pivoting the operating element in the clockwise direction to drive the first and second pivoting elements pivoting in the same direction, the first coupling rod may be configured to transmit the rotational motion from the first pivoting element to the second pivoting element by pulling the second pin. In contrast, by reversing or turning the operating element in an opposite counterclockwise direction to drive the first and second pivoting elements pivoting in the opposite direction, the second coupling rod instead of the first coupling rod may be configured to transmit the rotational motion from the second pivoting element to the first pivoting element by pulling the fourth pin. Accordingly, the first coupling rod may not transmit push forces as a result of the first slotted hole.

According to another embodiment, the plurality of modes of operation of the switchgear module may comprise a first mode of operation and a second mode of operation. Further, the first group of angular positions of the operating element may comprise a first angular position, which may be configured to interconnect with the first mode of operation of the switchgear module, and a second angular position, which may be configured to interconnect with the second mode of operation of the switchgear module.

According to another embodiment, the first mode of operation of the switchgear module may be an ON-mode and the second mode of operation of the switchgear module may be an OFF-mode. Further, the first angular position of the operating element may be a 0° angular positon, and the second angular position of the operating element may be a 90° angular positon or a 135° angular position.

According to another embodiment, the plurality of modes of operation of the switchgear module may further comprise a third mode of operation. Further, the first group of angular positions of the operating element may further comprise a third angular position, which may be configured to interconnect with the third mode of operation of the switchgear module.

According to another embodiment, the third mode of operation of the switchgear module may be an TEST-mode. It may be provided that the second angular position of the operating element may be a 90° angular positon and the third angular position of the operating element may be a 135° angular positon.

In the ON-mode, the switchgear module may be inserted or secured in the compartment, a main switch of the switchgear module may be closed, the main circuit and control circuit of the switchgear module may be connected. In the OFF-mode, the switchgear module may be inserted or secured in the compartment, the main switch of the switchgear module may be open, the main circuit and the control circuit of the switchgear module may be disconnected. A padlocking for the switchgear module may be provided for the OFF-mode. In the TEST-mode, the switchgear module may be inserted or secured in the compartment, the main switch of the switchgear module may be open, the main circuit of the switchgear module may be disconnected. A padlocking for the switchgear module may be provided for the TEST-mode. Compared to the OFF-mode, the additional TEST-mode may be designed to allow the control circuit being still connected.

It may be provided that the second group of angular positions of the operating element may comprise a closed angular position, which may be configured to interconnect with the interlocking element for securing the switchgear module to the compartment, and an open angular position, which may be configured to interconnect with the interlocking element for releasing the switchgear module from the compartment.

The interlocking element may be designed as a transition element, which may be arranged adjacent to the first pivoting element, in particular close to the radially protruding element of the of the first pivoting element when the operating element may pivot into the second or third angular position or at the 90° or 135° angular position. Once the radially protruding element of the first pivoting element may come into contact with, collide or abut on the interlocking element, the operating element may transit from the first angular range covering the first group of angular positions for the switching mechanism to the second angular range covering the second group of angular positions for the interlocking mechanism. The transition may thus be performed at the 90° or 135° angular position as a predefined turning angular position.

Alternatively, for example, the first angular position, the second angular position and/or the third angular position may be any angular position between 0° and 180° arranged in a sequence along the same direction for pivoting the operating element and the respective first and second pivoting elements being coupled with each other. As such, the predefined turning angular position being the second or third angular position may be arranged between 0° and 180°. Further, after the transition from the switching mechanism to the interlocking mechanism for the switchgear module, the pivoting element may drive the first pivoting element to the open angular position for releasing the switchgear module, which may be arranged, alternatively to the 180° angular position, between the turning angular position and the 180° angular position, or at a larger angular position between 180° to 360° angular positions, preferably between 180° to 270° angular positions, preferably between 180° or 225° angular positions.

The multi-use control system comprising the various components comprising the first and second pivoting elements and multiple coupling elements may allow the separation and the transition of the switching and interlocking mechanisms for the switchgear module in a continuous manner using the single operating handle. In other words, the transition from the controlling over the switching assembly to the controlling over the interlocking assembly in the continuous direction may be performed as a result of the collision of the radially protruding element of the first pivoting element with the interlocking element.

As a single operating handle, the operating element may be arranged on the front of the switchgear module and fulfill two separate functions safely and reliably: the switching of the switching device or the main switching device into all its possible positions, such as the ON-, OFF-, TEST-positions, which may be set by various angular positions such as 0°, 90°, 135° angular positions, and the locking or releasing the entire switchgear module inside its compartment by transmitting the rotary motion of the main handle to the interlocking element via the first pivoting element. This mechanism may ensure that the main switching assembly may be switched to the OFF-mode, before the switchgear module may be released. Once the switchgear module may be secured to into the compartment again, the mechanism may ensure that the switching assembly may first be switched to the OFF-mode and then the operating ON-mode. In particular, in order to meet the first functional requirement, the rotary motion of the operating handle on the switchgear module front may be translated to main switching assembly via the first and second pivoting elements coupled by the at least one coupling elements, so that the turning angles of the handle and the sense of the rotation of the switching assembly may correspond to each other.

According to a second aspect, a switchgear module comprising a multi-use control system of the present disclosure is provided. The switchgear module is a low-voltage switchgear module.

As the low-voltage switchgear module, the switchgear module may be configured to operate at a voltage range between 0 V and 1000 V. Alternatively, the switchgear module may be a medium-voltage or high-voltage switchgear module. And the multi-use control system may be integrated in the medium-voltage or high-voltage switchgear module. For example, the switchgear module comprising the multi-use control system may be provided for an automation or robotic system. However, the switchgear module may be provided for a further electrical power system.

Further, a use of a multi-use control system for a switchgear module may be provided for a safe operation of the switchgear module, for example in an automatic system or a robotic system.

According to a third aspect, a method for operating a switchgear module by means of a multi-use control system is provided. The method comprises the following steps: connecting a first pivoting element to an operating element being pivotable between a plurality of angular positions comprising a first group of angular positions and a second group of angular positions, connecting the first pivoting element and a second pivoting element, which is connectable to a switchgear module being switchable between the plurality of modes of operation, by means of at least one coupling element, allowing the first pivoting element and the second pivoting element pivoting for switching the switchgear module between the plurality of modes of operation, while pivoting the operating element between the first group of angular positions, and allowing the first pivoting element interconnecting with the interlocking element for securing or releasing the switchgear module, while pivoting the operating element between the second group of angular positions.

Additionally, the method may further comprise the step of pivoting the operating element in an opposite direction for securing the switchgear module to the compartment by disconnecting the first pivoting element from the interlocking element, transiting the controlling over the interlocking assembly to the controlling over the switching assembly, and pivoting the operating element between the first group of angular positions for switching the switchgear module between the plurality of modes of operation.

There may be provided a computer program that may comprise machine-readable instructions that, when executed by one or more computers and/or compute instances, cause the one or more computers and/or compute instances to perform a method for operating a switchgear module by means of a multi-use control system in an automation or robotic system.

There may be provided a non-transitory machine-readable data carrier and/or a download product with the computer program. A download product is an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, cause the one or more computers and/or compute instances to perform a method for operating a switchgear module by means of a multi-use control system in an electrical power system including an automation system and a robotic system, and/or with the machine-readable data carrier and/or download product with the computer program.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1 (a) to (d): shows schematically an example of a multi-use control system for a switchgear module in a front view according to the present disclosure;
- Fig. 2: shows schematically an example of a switchgear module according to the present disclosure;
- Fig. 3 (a) and (b): shows schematically an example of a multi-use control system for a switchgear module in a front view according to the present disclosure;
- Fig. 4: shows schematically an example of a multi-use control system for a switchgear module in a perspective view according to the present disclosure;
- Fig. 5: shows schematically a flow chart illustrating a method for operating a switchgear module by means of a multi-use control system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

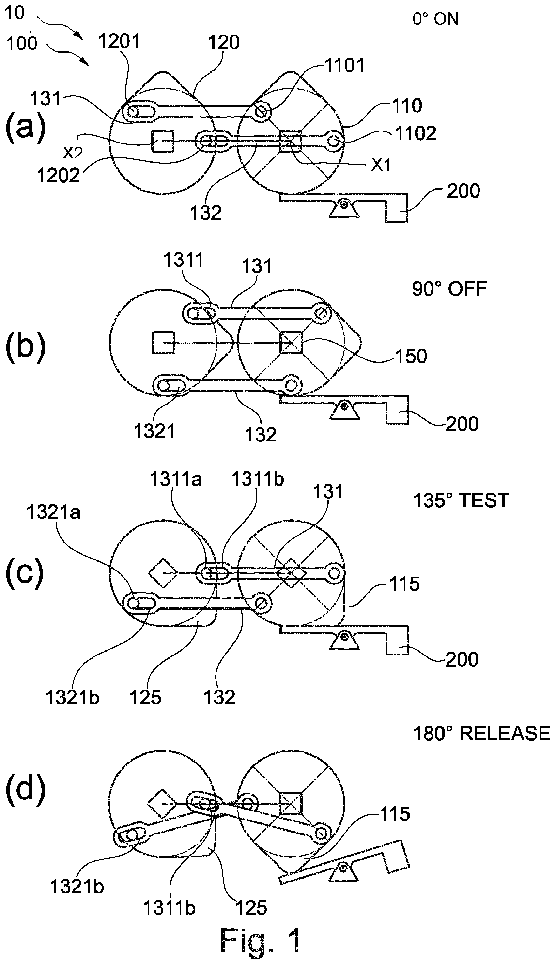

Fig. 1 shows schematically an example of a multi-use control system 100 for a switchgear module 10, which may be a low-voltage switchgear module. As shown in Fig. 1 (a) to (d), the multi-use control system 100 comprises a first pivoting element 110, a second pivoting element 120, at least one coupling element comprising a first coupling rod 131 and a second coupling rod 132, and an interlocking element 200.

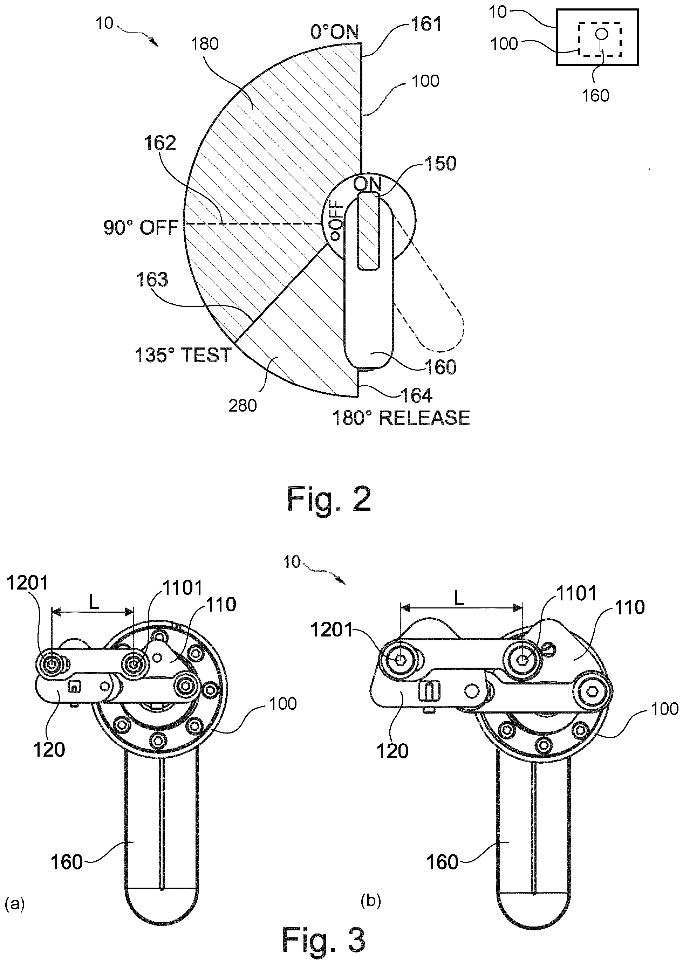

The first pivoting element 110 may be connectable to an operating element 160 as shown in Fig. 2, which may be pivotable between a plurality of angular positions comprising a first group of angular positions 162, 162, 163 and a second group of angular positions 163, 164.

The first pivoting element 110 may be configured to pivot about a first rotary axis X1 and the second pivoting element 120 may be configured to pivot about a second rotary axis X2. The first rotary axis X1 and the second rotary axis X2 may be arranged in parallel. In other words, the first and second pivoting element 110, 120 may comprise parallel rotary axis.

The first pivoting element 110 and the second pivoting element 120 may comprise a same dimension and/or a same shape. In other words, the first pivoting element 110 and the second pivoting element 120 may be designed to be two identical bodies on parallel rotary axes. While the first pivoting element 110 may be linked to the operating element 160, the second pivoting element 120 may be designed to be or linked to a main switching device of the switchgear module to switch between a plurality of modes of operation.

The control system 100 in Fig. 1 may further comprise the operating element 160 and a shaft 150, as shown in Fig. 1 (b) and Fig. 2, which may connect the operating element 160 on the switchgear module front. As such, the operating element 160 may be designed as a handle and arranged at the front side of the control system 100 and connected to the first pivoting element 110 at the first rotary axis X1.

In Fig. 1 (a) to (d), the first pivoting element 110 may be designed to be disk-shaped. Moreover, the first pivoting element 110 may comprise a round disk body portion and a radially protruding element 115 that is arranged at the rim of the round disk body portion, resulting in an non-rotationally symmetric shape of the first pivoting element 110. The radially protruding element 115 of the first pivoting element 110 may be configured to pivot until coming into contact or collide with the interlocking element 200, when the first pivoting element 110 follows the rotary motion of the operating element 160 pivoting within the second angular range covering the second groups of angular positions. The radially protruding element 115 of the first pivoting element 110 may abut on the interlocking element 200, which may be designed as a transition element for the control system 100 and arranged adjacent to the first pivoting element. In addition, the radially protruding element 115 of the first pivoting element 110 may transmit the rotary force or a rotational motion of the first pivoting element 110 to the interlocking element 200, for example, to allow the switchgear module being released from the compartment, when the operating element may pivot between the second group of angular positions 163, 162 as shown in Fig. 2.

The second pivoting element 120 may be connectable to a switchgear module 10 that may be switchable between the plurality of modes of operation. Hence, the second pivoting element 120 may pivot to switch the switchgear module 10 between the plurality of modes of operation. The plurality of modes of operation of the switchgear module 10 may comprise a first mode of operation, as shown in Fig. 1 (a), and a second mode of operation, as shown in Fig. 1 (b). The first mode of operation may be an ON-mode, in which the switchgear module may be switched to in a normal operation mode, while the second mode of operation may be an OFF-mode, in which the switchgear module 10 may be switched off or completely turned off. Also, in the ON-mode, the switchgear module 10 may be inserted or secured in the compartment, the main switch of the switchgear module 10 may be closed, the main circuit and control circuit of the switchgear module may be connected. In the OFF-mode, the switchgear module 10 may be inserted or secured in the compartment, the main switch of the switchgear module may be open, the main circuit and the control circuit of the switchgear module may be disconnected. A padlocking for the switchgear module may be provided for the OFF-mode. Additionally, the plurality of modes of operation of the switchgear module 10 further comprise a third mode of operation, which may be an TEST-mode, as shown in Fig. 1(c). In the TEST-mode, the switchgear module 10 may be inserted or secured in the compartment, the main switch of the switchgear module may be open, the main circuit of the switchgear module may be disconnected. A padlocking for the switchgear module 10 may be provided for the TEST-mode. Compared to the OFF-mode, the additional TEST-mode may be designed to allow the control circuit being still connected.

The first group of angular positions of the operating element 160 may comprise a first angular position 161 or a 0° angular position, which may be configured to interconnect with the first ON-mode of operation of the switchgear module 10 as shown in Fig. 1(a), and a second angular position 162 or a 90° angular position, configured to interconnect with the second mode of operation of the switchgear module 10 as shown in Fig. 1(b). Additionally, the first group of angular positions of the operating element 160 may further comprise a third angular position 163 or a 135° angular position, which may be configured to interconnect with the third TEST-mode of operation of the switchgear module 10 as shown in Fig. 1(c).

Fig. 2 further shows that the multi-use control system 100 having the operating element 160 may be arranged at the switchgear module 10. For example, the operating element 160 may be arranged at the outer surface of the switchgear module 10 or at the outer surface of the compartment for the switchgear module 10, so that the handle 160 may be pivotable from the exterior, and the other components such as the first and second pivoting elements 110, 120 and the at least one coupling element 131, 132 are arranged inside the switchgear module 10 or inside the compartment for securing the switchgear module 10. The operating element 160 may pivot in two separate angular ranges including a first angular range 180, which may cover the 0° to 90° or 135° angular positions, for switching the switchgear module between the ON-, OFF-and/or TEST-modes and a second angular range 280, which may cover the 90° or 135° to 180° angular positions, for controlling the interlocking assembly to lock or release the switchgear module 10. Further, the operating element 160 may be designed to pivot continuously between the first angular range 180 and the second angular range 280, so that the switching mechanism and the interlocking mechanism for the switchgear module 10 may be transited seamlessly both in the counterclockwise direction and in the clockwise direction.

In Fig. 2, the second group of angular positions of the handle 160 may further comprise a closed angular position and an open angular position 164. The closed angular position may be the third 135° angular position 163 of Fig. 1 (c) and may be designed as a turning angular position, in which the switchgear module 10 may still be secured to the compartment, and the open angular position 164 may be configured to interconnect with or correspond to the interlocking element for releasing the switchgear module 10 from the compartment in a RELEASE-mode as shown in Fig. 1 (d). The open angular position 164 may be set as a 180° angular position.

As shown in Fig. 1 (a) to (d), the at least one coupling element 131, 132 may be provided for the control system 100 and configured to connect or couple the first pivoting element 110 and the second pivoting element 120. The at least one coupling element 131, 132 comprises a first coupling rod 131 and a second coupling rod 132, which may comprise a same elongated shape and dimension. The first coupling rod 131 may be configured to connect the first pivoting element 110 by means of a first pin 1101 arranged at the first pivoting element 110 and to connect the second pivoting element 120 by means of a second pin 1201 of the second pivoting element 120, while the second coupling rod 132 may be configured to connect the first pivoting element 110 by means of a third pin 1102 arranged at the first pivoting element 110 and to connect the second pivoting element 120 by means of a fourth pin 1202 of the second pivoting element 120. The first pin 1101 and the third pin 1102 may be arranged on the same side of the first pivoting element 110, which the second pin 1201 and the fourth pin 1202 may be arranged at the same side of the second pivoting element 120. In Fig. 1, the first coupling rod 131 and the second coupling rod 132 may connect with the first and second pivoting elements 110, 120 on the same parallel sides.

The first and second coupling rod 131, 132 may be configured to allow the first pivoting element 110 and the second pivoting element 120 pivoting for switching the switchgear module 10 between the ON-mode, the OFF-mode and TEST-mode as shown, respectively, in Fig. 1 (a), (b) and (c), when the operating element 160 in Fig. 2 may pivot between the first 0° angular position 161, the second angular position 162 and the third angular position 163. In this switching mechanism for the switchgear module 10, the first coupling rod 131 may be configured to couple the first pivoting element 110 and the second pivoting element 120 and transmit a rotational motion of the first pivoting element 110 to the second pivoting element 120 for switching the switchgear module 10 between the plurality of modes of operation, when the operating element 160 may pivot between the first 0°-, second 90°- and third 135° angular positions 161, 162, 163.

Further, the first and second coupling rod 131, 132 may be configured to allow the first pivoting element 110 interconnecting with the interlocking element 200 for releasing the switchgear module 10 from the TEST-mode of the module 10 as shown in Fig. 1 (c) to a RELEASE-mode of the control system 100 as shown in Fig. 1 (d), when the operating element 160 pivots between the closed angular position at the 135° angular position 163 and the open angular position at the 180° angular position 164.

Using the multi-use control system 100, the interlocking mechanism and the switching mechanism may be provided separately from each other but able to be transited to each other using the single operating element 160 and the first and second pivoting elements 110, 120 being coupled by the first and second coupling rods 131, 132.

In Fig. 1 (a) to (d), the first coupling rod 131 comprises a first slotted opening 1311, along which the second pin 1201 of the second pivoting element 120 is able to slide, when the operating element 160 may pivot between the closed 135°- and open 180° angular positions 163, 164, so that the rotational motion of the first pivoting element 110 at least cannot be fully transmitted to the second pivoting element 110 but to the interlocking element 200. Also, the second coupling rod 132 comprises a second slotted opening 1321, along which the fourth pin 1202 of the second pivoting element 120 is able to slide, when the operating element 160 may pivot between the closed 135°- and open 180° angular positions 163, 164, so that the rotational motion of the first pivoting element 110 at least cannot be fully transmitted to the second pivoting element 110 but to the interlocking element 200.

By pivoting the operating element 160 in a clockwise direction from the first 0° angular position 161 via the second 90° angular position 162 to the third 180° angular position 163 for switching the switchgear module 10 from the ON-mode in Fig. 1 (a) via the OFF-mode in Fig. 1 (b) to the TEST-mode in Fig. 1(c), the connected first pivoting element 110 is driven to pivot around the first rotary axis X1 and the rotational motion of the first pivoting element 110 may be transmitted simultaneously to the second pivoting element 120 via the first coupling rod 131. In the switching mechanism, the second pin 1201 of the second pivoting element 110 may be arranged at the first slotted opening 1311 in such a way that the second pin 1201 may be fixed at a first end 1311a of the first slotted opening 1311 to couple the second pivoting element 120 with the first pivoting element 110. In other words, the first coupling rod 131 may pull the second pin 1201 on the second pivoting element 1311 while being connected to the first pivoting element 110 by another first pin 1101. The second coupling rod 132 may be arranged in parallel to the first coupling rod 131. As such, in the switching mechanism, the fourth pin 1202 of the second pivoting element 110 may be arranged at the second slotted opening 1321 in such a way that the fourth pin 1202 may be fixed at a first end 1321a of the second slotted opening 1321 to couple the second pivoting element 120 with the first pivoting element 110.

By further pivoting the operating element 160 in the same clockwise direction from the 135° angular position 163, which may be designed to be a turning angular position as the third angular position for the switching mechanism and the closed angular position for the interlocking mechanism, to the closed 180° angular position 164 for releasing the switchgear module 10 in the RELEASE-mode of the control system 100, the first coupling rod 131 no longer transmits the rotary motion from the first pivoting element 110 to the second pivoting element 120, since the second pin 1201 of the second pivoting element 120 may slide along the first slotted opening 1311 from the first end 1311a to the second end 1311b of the first slotted opening 1311, so that the second pivoting element 120 may at least be partially decoupled from the first pivoting element 110 and the rotational motion of the first pivoting element 110 may at least be not fully transmitted to the second pivoting element 120. Accordingly, the switching mechanism of the switchgear module 10 may be decoupled from the further pivoting of the first pivoting element 110 and the operating element 160, and the switchgear module 10 may not be switched to a different mode of operation. Instead, at about the open 180° angular position, the radially protruding element 115 of the first pivoting element 110 may abut and push on the interlocking element 200 that may release a lock for the switchgear module 10. Simultaneously, the second radially protruding element 125 of the second pivoting element 120 may not pivot or at least not synchronized pivot as the radially protruding element 115 of the first pivoting element 110. The fourth pin 1202 of the second pivoting element 120 may slide along the second slotted opening 1321 from the first end 1321a to the second end 1321b of the first slotted opening 1321. The first and second coupling rods 131, 132 may not be arranged in parallel in the RELEASE-mode of the control system 100 as shown in Fig. 1 (d).

Additionally, the operating element 160 may also pivot in an opposite counterclockwise direction to drive the pivoting direction of the first pivoting element 110 to pivot in the counterclockwise direction and disconnect from the interlocking element 200 for locking or securing the switchgear module 10 inside the compartment again, to transit the interlocking mechanism to the switching mechanisms, and to switch the module 10 between the various modes of operation, in particular, from the TEST-mode in Fig. 1 (c) to the OFF-mode in Fig. 1 (b) and further to the ON-mode in Fig. 1 (a).

It may be noted that, the returning path of the control system 100 by turning the pivoting direction of the handle 160 and the first and second pivoting elements 110, 120 may follow analogously the reversed path from Fig. 1 (d) via Fig. 1 (c) and Fig. 1(b) to Fig. 1(a) with one exception that, instead of the first coupling rod 131, the second coupling rod 132 may be configured to transmit the rotational motion between the first and second pivoting elements 110, 120, in particular between the third 135° angular position for the TEST-mode via the second 90° angular position for the OFF-mode to the first 0° angular position for the ON-mode, by pulling the fourth pin 1202 of the second pivoting element 120. The first coupling rod 131 may not transmit the rotary motion or the push forces as a result of the first slotted opening 1311 arranged at the first coupling rod 131 to connect the second pivoting element 120 via the the second pin 1201.

Fig. 3 shows in (a) and (b) that the length of the first coupling rod 131 and/or the second coupling rod 132 may be designed to be variable or adjustable depending on the various dimensions of the switchgear module 10 and/or the compartment in which the switchgear module 10 may be placed and secured. The length L of the coupling rods 131, 132 may correspond to a predefined axis distance between of the first rotary axis X1 of the first pivoting element 110 and the second rotary axis X2 of the second pivoting element 120, in order to satisfy different requirements for the different sizes or dimensions of the switchgear module 10. For example, the length L of the first and/or second coupling rod 131, 132 may be designed to be equal to or larger than 40 mm for a relative small dimension of the switchgear module 10 or, preferably, equal to or larger than 60 mm for a relative large dimension of the switchgear module 10. While the larger version may satisfy the operating torque requirements for the larger switch fuses, for example max. 38 Nm, of the module 10, the smaller version may fit better into the limited space of the smaller module 10, which may comprise switch fuses with a comparatively small operating torque, for example max. 7 Nm. Further, the variable length of the at least one coupling rod 131, 132, may advantageously result in the variable axis distance between the axis of the operating element 160 and the axis of the switching assembly or the switch fuse of the switchgear module 10.

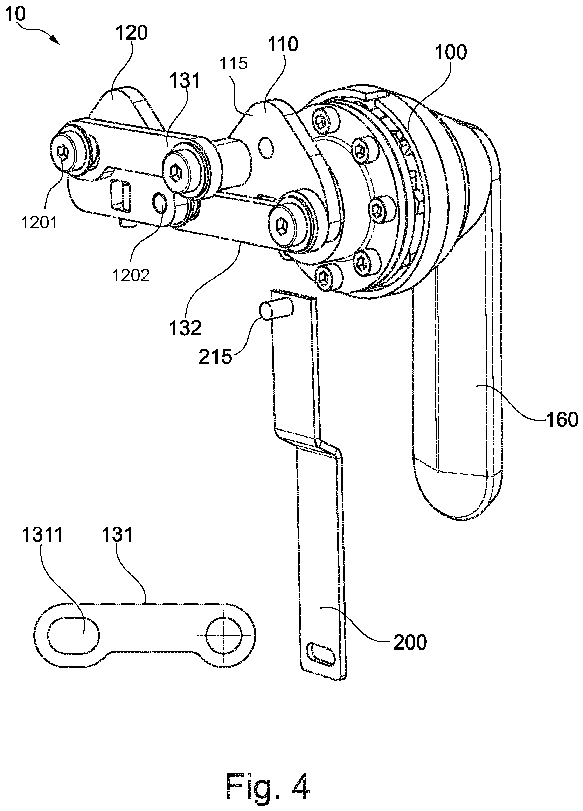

Compared to the first and second pivoting elements shown in Fig. 1, the first and second pivoting elements as shown in Fig. 3 (a) and (b) and in Fig. 4 are designed, respectively, to be a triangular-shaped disk element. In Fig. 4, the fourth pin 1202 and the second pin 1201 may be arranged on different or an opposite sides of the second pivoting element 120, so that the second coupling rod 132 may be arranged at the opposite side of the second pivoting element 120 that is different from the first coupling rod 131 arranged at the same side as the second pin 1201 of the second pivoting element 120. A corner portion of the first triangular-shaped disk element 110 may be designed to be the radially protruding element 115 to collide with the interlocking element 200, when the handle 160 may pivot to the 135° angular position 163.

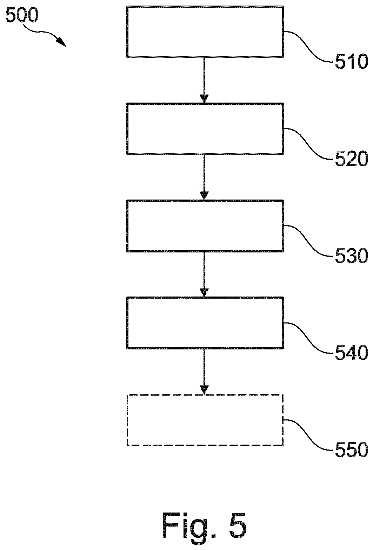

Fig. 5 shows schematically a flow chart illustrating a method 500 for operating a switchgear module 10 by means of a multi-use control system 100.

In step 510, a first pivoting element 110 is connected to an operating element 160 being pivotable between a plurality of angular positions comprising a first group of angular positions 161, 162, 163 and a second group of angular positions 163, 164.

In step 520, the first pivoting element 110 and a second pivoting element 120 are connected. The second pivoting element 120 is connectable to a switchgear module 10 being switchable between the plurality of modes of operation, by means of at least one coupling element 131, 132.

In step 530, the first pivoting element 110 and the second pivoting element 120 are allowed to pivot for switching the switchgear module 10 between the plurality of modes of operation, while pivoting the operating element 160 between the first group of angular positions 161, 162, 163.

In step 540, the first pivoting element 110 is allowed to interconnect with the interlocking element 200 for securing or releasing the switchgear module 10, while pivoting the operating element 160 between the second group of angular positions 163, 164.

Additionally, the method may further comprise the step 550, in which the operating element 160 may pivot in an opposite direction for securing the switchgear module 10 to the compartment by disconnecting the first pivoting element 110 from the interlocking element 200, transiting the interlocking mechanism to the switching mechanism, and pivoting the operating element 160 between the first group of angular positions 161, 162, 163 for switching the switchgear module between the plurality of modes of operation.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: switchgear module
- 100: multi-use control system
- 110: first pivoting element
- 1101: first pin
- 1102: third pin
- 120: second pivoting element
- 1201: second pin
- 1202: fourth pin
- 131: first coupling rod
- 1311: first slotted opening
- 1311a: first end of first slotted opening
- 1311b: second end of first slotted opening
- 132: second coupling rod
- 1321: second slotted opening
- 1321a: first end of second slotted opening
- 1321b: second end of second slotted opening
- 150: shaft
- 160: opering element or handle
- 161: first angular position
- 162: second angular position
- 163: third angular position / closed angular position
- 164: open angular position
- 180: first angular range
- 200: interlocking element
- 280: second angular range
- X1: first rotary axis
- X2: second rotary axis
- L: length of coupling element or coupling rod
- 500: method for operating a switchgear module
- 510: step of connecting first pivoting element to operating element
- 520: step of connecting first pivoting element and second pivoting element
- 530: step of allowing first pivoting element and second pivoting element pivoting
- 540: step of allowing first pivoting element interconnecting with interlocking element
- 550: step of pivoting the operating element in an opposite direction

## Claims

1. Multi-use control system (100) for a switchgear module (10), comprising:
a first pivoting element (110), which is connectable to an operating element (160) being pivotable between a plurality of angular positions comprising a first group of angular positions (161, 162, 163) and a second group of angular positions (163, 164),
a second pivoting element (120), which is connectable to a switchgear module (10) being switchable between a plurality of modes of operation,
at least one coupling element (131, 132), configured to connect the first pivoting element (110) and the second pivoting element (120), and
an interlocking element (200), configured to secure the switchgear module (10) to or release the switchgear module from a compartment;
wherein the at least one coupling element (131, 132) is configured to allow the first pivoting element (110) and the second pivoting element (120) pivoting for switching the switchgear module (10) between the plurality of modes of operation, when the operating element (160) pivots between the first group of angular positions (161, 162, 163);
wherein the at least one coupling element (131, 132) is configured to allow the first pivoting element (110) interconnecting with the interlocking element (200) for securing or releasing the switchgear module (10), when the operating element (160) pivots between the second group of angular positions (163, 164).

2. The multi-use control system (100) according to claim 1, further comprising:
the operating element (160);
wherein the operating element (160) is a handle, configured to connect to the first pivoting element (110) via a shaft (150).

3. The multi-use control system (100) according to claim 1 or 2,
wherein the first pivoting element (110) is configured to pivot about a first rotary axis (X1) and the second pivoting element (120) is configured to pivot about a second rotary axis (X2);
wherein the first rotary axis (X1) and the second rotary axis (X2) are arranged in parallel.

4. The multi-use control system (100) according to one of the preceding claims,
wherein the first pivoting element (110) comprises a non-rotationally symmetric shape.

5. The multi-use control system (100) according to one of the preceding claims,
wherein the first pivoting element (110) comprises a radially protruding element (115), configured to abut on the interlocking element (200) and transmit a rotational motion of the first pivoting element (110) to the interlocking element (200) for releasing the switchgear module, when the operating element (160) pivots between the second group of angular positions (163, 164).

6. The multi-use control system (100) according to one of the preceding claims,
wherein the first pivoting element (110) comprises a same dimension and/or a same shape as the second pivoting element (120).

7. The multi-use control system (100) according to one of the preceding claims,
wherein the at least one coupling element (131, 132) comprises a first coupling rod (131), configured to connect the first pivoting element (110) by means of a first pin (1101) arranged at the first pivoting element (110) and to connect the second pivoting element (120) by means of a second pin (1201) of the second pivoting element (120).

8. The multi-use control system (100) according to claim 7,
wherein the first coupling rod (131) is configured to couple the first pivoting element (110) and the second pivoting element (120) and transmit a rotational motion of the first pivoting element (110) to the second pivoting element (120) for switching the switchgear module (10) between the plurality of modes of operation, when the operating element (160) pivots between the first group of angular positions (161, 162, 163).

9. The multi-use control system (100) according to claim 7 or 8,
wherein the first coupling rod (131) comprises a first slotted opening (1311), along which the second pin (1201) of the second pivoting element (120) is able to slide, when the operating element (160) pivots between the second group of angular positions (163, 164), so that the rotational motion of the first pivoting element (110) at least cannot be fully transmitted to the second pivoting element (120).

10. The multi-use control system (100) according to one of the claims 7 to 9,
wherein the at least one coupling element (131, 132) further comprises a second coupling rod (132), configured to connect the first pivoting element (110) by means of a third pin (1102) arranged at the first pivoting element (110) and to connect the second pivoting element (120) by means of a fourth pin (1202) of the second pivoting element (120);
wherein the second coupling rod (132) comprises a second slotted opening (1321), along which the fourth pin (1202) of the second pivoting element (120) is able to slide, when the operating element (160) pivots between the second group of angular positions (163, 164).

11. The multi-use control system (100) according to one of the preceding claims,
wherein the plurality of modes of operation of the switchgear module (10) comprises a first mode of operation and a second mode of operation;
wherein the first group of angular positions of the operating element (160) comprises a first angular position (161), configured to interconnect with the first mode of operation of the switchgear module (10), and a second angular position (162), configured to interconnect with the second mode of operation of the switchgear module (10).

12. The multi-use control system (100) according to claim 11,
wherein the first mode of operation of the switchgear module (10) is an ON-mode and the second mode of operation of the switchgear module is an OFF-mode;
wherein the first angular position (161) of the operating element (160) is a 0° angular positon, and the second angular position (162) of the operating element is a 90° angular positon or a 135° angular position.

13. The multi-use control system (100) according to one of the preceding claims,
wherein the plurality of modes of operation of the switchgear module (10) further comprises a third mode of operation;
wherein the first group of angular positions of the operating element further comprises a third angular position (163), configured to interconnect with the third mode of operation of the switchgear module (10).

14. The multi-use control system according to claim 13,
wherein the third mode of operation of the switchgear module (10) is an TEST-mode;
wherein the second angular position (162) of the operating element is a 90° angular positon and the third angular position (163) of the operating element is a 135° angular positon.

15. Switchgear module (10) comprising a multi-use control system (100) according to one of the preceding claims 1 to 14,
wherein the switchgear module (10) is a low-voltage switchgear module.

16. Method (500) for operating a switchgear module (10) by means of a multi-use control system (100), comprising the steps of:
connecting (510) a first pivoting element (110) to an operating element (160) being pivotable between a plurality of angular positions comprising a first group of angular positions (161, 162, 163) and a second group of angular positions (163, 164);
connecting (520) the first pivoting element (110) and a second pivoting element (120), which is connectable to a switchgear module (10) being switchable between the plurality of modes of operation, by means of at least one coupling element (131, 132);
allowing (530) the first pivoting element (110) and the second pivoting element (120) pivoting for switching the switchgear module (10) between the plurality of modes of operation, while pivoting the operating element (160) between the first group of angular positions (161, 162, 163);
allowing (540) the first pivoting element (110) interconnecting with the interlocking element (200) for securing or releasing the switchgear module (10), while pivoting the operating element (160) between the second group of angular positions (163, 164).
